# EUROPEAN PATENT APPLICATION

(11) **EP 4 331 368 A1**
(43) Date of publication of application: **06.03.2024**
(21) Application number: 23194076.8
(22) Date of filing: 29.08.2023
(51) Int. Cl.: A21D 2/16, A23D 7/00, A23D 9/00, C11C 3/10, A23D 9/02, A23D 7/005, A23D 7/01, A23D 7/02, A23D 7/05, C11C 3/12

(54) **EDIBLE PRODUCT**

(30) Priority: 30.08.2022 BE 202205688
(71) Applicant: Vandemoortele Lipids, 9000 Gent (BE)
(72) Inventor: HEYMAN, Bart, 9000 Gent (BE); COUDRON, Joost, 9000 Gent (BE); RIMAUX, Tom, 9000 Gent (BE); BEIRINCKX, Nele, 9000 Gent (BE); COGHE, Jonathan, 9000 Gent (BE)
(74) Representative: Gevers Patents

(57) **Abstract**

An edible, water-in-oil (W/O) emulsified product comprising from 60.0 to 98.0 weight percent [hereafter wt. %] of a fat phase, and 2.0 to 40.0 wt. % of an aqueous phase, relative to the total weight of the edible, water-in-oil W/O emulsified product,
wherein the fat phase comprises from 50.0 to 100.0 wt. % of a hardstock phase and at most 50.0 wt. % of at least one first liquid oil, wherein the hardstock phase comprises at least one fully hardened fat and wherein the hardstock phase comprises from 80.0 to 100.0 wt. % of an interesterified hardstock phase and at most 20.0 wt. % of a non-interesterified hardstock phase.

## Description

The present invention relates to edible, water-in-oil (W/O) emulsified products, suitable for application in cakes, puff pastry products or other bakery applications, which are characterized in that no use is made of tropical oils or fats in their preparation. The invention also relates to a method for producing said edible, water-in-oil (W/O) emulsified products.

### 1. Background of the invention

Bakery fat compositions are widely used as raw materials in the industrial or artisanal preparation of bakery products, such as for example puff pastry, croissants and other viennoiserie, cakes, waffles, or biscuits. Bakery fat compositions consist of a continuous fat matrix in which other ingredients or raw materials are optionally comprised. Bakery fat compositions containing little or no water are usually denoted as "shortenings". Another important group among the bakery fat compositions are water-in-oil emulsions (W/O) in which an aqueous phase is emulsified in the fat phase. Within the context of this document, bakery fat compositions of the 'water-in-oil' emulsion type will also be denoted as bakery margarine, although in some countries, the term margarine is subject to stricter legal requirements. For retail applications such as spreading and frying, which are outside of the scope of this document, the terms margarine and spread are often used interchangeably for a wide range of water-in-oil emulsions.

A very important group of bakery fat compositions are the so-called laminating margarines for use in laminated doughs. These laminated doughs consist of alternating layers of dough and margarine, and are used for the preparation of for example puff pastry. Laminated dough can also be made to rise using baker's yeast for the preparation of viennoiserie products, such as for example croissants. The layered structure is typically prepared by repeatedly folding and rolling out one or more layers of margarine and layers of dough (i.e., the French method). An alternative method (i.e., the Dutch or the Scottish method) involves the addition of small cubes of margarine to the flour, followed by kneading the dough while water and optionally other ingredients are added. During this kneading, the cubes of margarine should be preserved as separate entities. The dough thus obtained is then repeatedly folded and rolled out to produce the laminated dough. Depending on the procedure used for preparing the dough, the intermediate layers of margarine cover the entire surface area of the laminated dough or are present in the dough as layers having a smaller surface area. During baking, water evaporates, and the layers of dough expand as a result of the intermediate layers of margarine forming a barrier against the steam being formed. This causes the laminated dough to increase substantially in height and creates the typical flaky structure of puff pastry.

The hardness and texture of bakery margarines must meet specific restrictions. The bakery margarines are often extruded into blocks or plates and then packed in a wrapper, wherein the freshly prepared margarine needs to have sufficient consistency in order to retain its shape. The extruded blocks or plates of bakery margarines also need to be stackable without deformation during transport and/or storage with minimal support. Furthermore, the margarines largely determine the properties of the bakery applications in which they are applied or used. In the preparation of a cake, the margarine affects the volume, as well as the structure and texture of the crumb. Moreover, laminating margarines should have the correct textural properties in order to roll in properly and maintain separation of the layers. Indeed, if the margarine is too hard and insufficiently plastic, it will rip or puncture the dough during rolling out. If the margarine is too soft, however, the margarine is absorbed into the dough and the necessary distinction between the different layers of margarine and layers of dough disappears.

Consequently, the selection of the fat phase strongly determines the application range of the margarine (type of bakery application, processing temperature...). Combinations of various types of oils and fats are used in the preparation of margarines. Often, the fat phase typically involves a combination of solid fat and, optionally, liquid oil. The solid fat is also known as "hardstock" in the technical jargon. A hardstock phase may be a single fat, but it can also be a composition of one or more "hardstocks", either interesterified or not. The fat crystals form the structuring units in the continuous fat matrix of margarines. The solid fat content or solid fat content (SFC) profile, as determined by pulse NMR, yields a first assessment on the suitability of a fat phase for use in bakery margarines. This method determines the content of crystalline material forming the fat phase following a mandatory temperature stabilization profile, as widely known in the professional literature. However, the suitability of a fat phase for use in bakery margarines is not solely determined by the SFC profile. In particular, the crystallization behavior of the fat phase combined with the selection of the imposed process conditions will influence the properties and the functionality of the margarine. These determine the actual content of crystalline fat present in the end product, as well as the crystal size and morphology.

The hardstock or solid fat used in bakery margarines is typically derived from tropical fats, mainly palm oil. In the European Union, the oils and fats used are listed on the label of the respective food product, as they are part of the information about the food product that is essential to consumers. Indeed, consumers are paying increasing attention to the oils and fats used as listed on the label of the food product, and they clearly voice a number of preferences. One of the consumer's preferences is products free from tropical fats. By tropical fats are meant fats of tropical origin, of which the main examples are palm oil, palm kernel oil, coconut oil, shea butter, and cocoa butter. Palm oil and palm kernel oil have an unfavorable image in terms of sustainability, as these oils are directly associated with palm plantations that occupy ever larger areas at the expense of rainforest to be preserved. Moreover, palm oil has a rather high content of palmitic acid (C16:0 fatty acid), which is known as an atherogen. Coconut oil, too, is increasingly produced on a large scale and is therefore also criticized from the point of view of sustainability. For the reasons mentioned above, producers have started looking for alternative raw materials. This search has often led producers to shea butter or fractions thereof. However, the use of shea butter also comes with a number of disadvantages. Shea butter is traditionally often used in cosmetics, and hence is not immediately associated with food. The high content of unsaponifiable fraction in the shea fat has a soothing effect, for example when it is used in skin creams. However, this unsaponifiable fraction leads to a decreased stability and is also associated with the typical shea-smell and shea-taste, which are less appreciated in food. Lastly, the lower and sometimes variable availability of shea poses an additional problem. The latter problem also plays an important role in newer types of oils and fats derived from hybrids or from genetically modified crops. Some of these new types have been developed for providing oils having an elevated stearic acid (C18:0 fatty acid) or lauric acid (C12:0 fatty acid) level, with the intention of being able to replace tropical fats. However, these levels of stearic acid or lauric acid are still very limited, making these oils suitable for use in spread margarines, but not for use in laminating margarines, where a much harder texture is required.

It is known that structuring solid fats can be formed from liquid oils by means of hydrogenation or hardening. Hydrogenation or hardening entails a chemical modification in which unsaturated fatty acids are converted to saturated fatty acids. When fully hardened, these fats contain a very low or negligible level of trans fatty acids. Fully hardened fats are difficult to use as such as hardstock for margarines, mainly due to their rather constant solid fat content (SFC) at different temperatures, as well as their high melting point. On the other hand, fats which in themselves are unsuitable or less suitable as a structuring fat can be subjected to interesterification, often in the presence of one or more fats or liquid oils. Interesterification preserves the fatty acid composition of the fat mixture, but this interesterification causes a rearrangement (i.e., a redistribution) of the fatty acids present on the glycerol base structure. Interesterification may occur chemically or enzymatically, whereby the interesterified fat may have improved properties when compared to the starting materials. However, due to the restrictions described above, not all interesterified fats are suitable for application in bakery applications. The special requirements for the functionality of interesterified laminating fats are reflected in the sometimes unusual choices and combinations of raw materials. In general, for this purpose, a lauric fat and a non-lauric fat are combined and interesterified. Lauric fats are fats that are rich in lauric acid (C12:0) and myristic acid (C14:0), such as palm kernel fat (palm kernel oil) and coconut fat (coconut oil) or fractions thereof. The non-lauric fats are often fats derived from palm, preferably hard fractions of palm oil, the so-called palm stearins, and/or fats derived from fully hardened liquid oils. However, as already mentioned above, the consumer is increasingly interested in products in which no tropical fats, such as for example palm oil and coconut oil, have been added, due to the less sustainable perception of these tropical fats.

EP 1 040 761 A1, for example, relates to the use of interesterified fat mixtures rich in saturated C18 fatty acid residues (C18:0) and mono-unsaturated C18 fatty acid residues (C18:1) for applications in puff pastry margarines. This fat mixture is preferably obtained by chemical interesterification of shea olein. For applications in puff pastry margarines, this interesterified shea olein fat mixture is further combined with rapeseed oil, palm stearin, and/or partially hardened palm oil. Although the puff pastry margarines thus obtained in working example 3 are characterized by sufficient plasticity and texture and yield a good result in the baked end product, significant amounts of tropical origin oils are used.

WO 2019/185444 A1 describes non-hardened, chemically interesterified fat mixtures in which shea fat, preferably shea stearin, is combined with coconut oil, without the use of palm fats. More in particular, the shea fat serves as a source of saturated C18 fatty acid residues (C18:0) and mono-unsaturated C18 fatty acid residues (C18:1), which are now combined with coconut oil as a source of lauric acid (C12:0). Furthermore, working examples 3 and 4 describe the use of these chemically interesterified fat mixtures for the preparation of shortenings characterized by sufficient plasticity and texture and the use of these obtained shortenings as a laminating fat in puff pastry applications. However, apart from the fact that the prepared shortenings in the absence of water are not emulsified products, the interesterified fat mixtures are characterized by an elevated level of saturated fatty acid residues (SAFA). Moreover, despite the absence of palm fats, significant amounts of tropical coconut oil and shea are used in the interesterified fat mixtures.

EP 3 434 109 A1 describes margarines containing plastic fats. These plastic fats are obtained by interesterification of a combination of fats having a level of lauric acid (C12:0 fatty acid) of 5 - 25 weight percent, a level of palmitic acid (C16:0 fatty acid) of 5 - 25 weight percent, and a level of stearic acid (C18:0 fatty acid) of 10 - 35 weight percent, wherein the mutual ratio of stearic acid to palmitic acid is 0.5 - 7. Thus, EP 3 434 109 A1 describes plastic fats having a relatively high level of stearic acid. These plastic fats can then be used in laminating fat compositions by further mixing in other fats or liquid oils. In order to obtain laminating fat compositions that are characterized by sufficient plasticity, texture and processability, and in which the final baked end products such as croissants have a crispy structure and exhibit good melting behavior in the mouth, the amounts of the C12:0, C16:0, and C18:0 fatty acids need to be correctly balanced. Again, significant amounts of (fractions of) tropical palm oil and palm kernel oil are used for the preparation of the plastic fats and the laminating fat compositions.

WO 96/14755 A1 describes the production of a hardstock by interesterification of a vegetable oil with a fully hardened oil, followed by a fractionation step in which the high-melting triglycerides, the stearin fraction, are separated and the residual olein fraction is retained. This olein fraction is then used for the production of spreads and spreadable margarines. The examples of WO 96/14755 A1 are generally free of tropical oils and fats. The main objective of WO 96/14755 A1 is to improve the nutritional and sensory properties and the spreadability of the end products compared to the prior art. To improve the spreadability and melt-down behavior of the spread margarines, the removal of the high-melting stearin fraction is described in WO 96/14755 A1 as essential. By judiciously choosing the ratio of the oil and fat in the interesterification mixture, as well as by the correct choice of the fractionation conditions following interesterification, spreads with improved textural properties were produced. However, WO 96/14755 A1 does not provide insights regarding the production of high-performance bakery margarines with the desired functional properties using an interesterified hardstock, free of tropical fats, without a prior fractionation step. The emulsions described in the various examples of WO 96/14755 A1 were not developed for bakery applications and have therefore not been evaluated in these applications. The possibility suggested in WO 96/14755 A1 of using certain fractions in bakery applications is based solely on the SFC profile of the fat composition, without realizing whether this one parameter is sufficient to produce margarines with the desired textural and functional properties for these applications.

From the above, it thus appears that there is a need for edible, water-in-oil (W/O) emulsified products, in particular extruded bakery margarines, that are suitable for use in cakes, puff pastry products or other bakery applications, characterized by desired textural properties, a favorable nutritional profile and favorable organoleptic characteristics, which are further characterized in that no use is made in their preparation of oils or fats of tropical origin or GMO origin in order to obtain the desired fatty acid composition, and wherein the raw materials used are commercially available in sufficient amounts. A measure of the availability of an oil or a fat may be whether or not that oil or fat is mentioned in the Codex Alimentarius.

### 2. Summary of the invention

The inventors have now surprisingly found that it is possible to provide an edible, water-in-oil (W/O) emulsified product that is free from tropical fats and that meets the above needs.

It is therefore an aim of the present invention to provide an edible, water-in-oil (W/O) emulsified product comprising from 60.0 to 98.0 weight percent [hereafter wt. %] of a fat phase, and 2.0 to 40.0 wt. % of an aqueous phase, relative to the total weight of the edible, water-in-oil (W/O) emulsified product,
wherein the fat phase comprises from 50.0 to 100.0 wt. % of a hardstock phase and at most 50.0 wt. % of at least one first liquid oil, wherein the hardstock phase comprises at least one fully hardened fat and wherein the hardstock phase comprises from 80.0 to 100.0 wt. % of an interesterified hardstock phase and at most 20.0 wt. % of a non-interesterified hardstock phase, and wherein the fat phase contains, relative to the total weight of all fatty acid residues in the fat phase:
a) at most 5.0 wt. % of saturated C12 fatty acid residues (C12:0),
b) at most 10.0 wt. % of saturated C16 fatty acid residues (C16:0),
c) less than 3.0 wt. % of trans fatty acid residues (TFA),
and wherein the fat phase is further characterized by:
d) a solid fat content (SFC) at 10 °C (SFC10) from 30.0 to 70.0 %,
e) an SFC value at 20 °C (SFC20) from 20.0 to 50.0 %,
f) an SFC value at 40 °C (SFC40) from 0.0 to 25.0 %,
wherein the SFC values are measured according to the standard method AOCS Cd 16b-93,
and wherein the hardstock phase contains, relative to the total weight of all fatty acid residues in the hardstock phase:
g) 35.0 to 65.0 wt. % of saturated C18 fatty acid residues (C18:0),
h) 25.0 to 50.0 wt. % of mono-unsaturated C18 fatty acid residues (C18:1), and
i) at most 25.0 wt. % of poly-unsaturated C18 fatty acid residues (C18:2 and C18:3).

It is also an aim of the present invention to provide a method for producing said edible, water-in-oil (W/O) emulsified product.

It is also an aim of the present invention to provide a dough, in particular a laminated dough, comprising said edible, water-in-oil (W/O) emulsified product.

It is also an aim of the present invention to provide a method for producing a laminated dough.

It is also an aim of the present invention to provide a baked product obtained by baking the dough, in particular the laminated dough, comprising said edible, water-in-oil (W/O) emulsified product.

### 3. Detailed description of the invention

Within the scope of the present invention, the following terms and definitions are used.

The term "comprising", as used in the claims, should not be interpreted as being limited to the means listed thereafter; such a term does not exclude other elements or steps. The term should be interpreted as specifying the presence of said features, integers, steps, or components, without, however, precluding the presence or addition of one or more additional features, integers, steps or components, or groups thereof. Thus, the scope of the expression "a product comprising the components A and B" should not be limited to the product consisting only of the components A and B. It means that, with respect to the present invention, the only relevant components of the product are A and B. Accordingly, the terms "comprising" and "including" encompass the more limiting terms "consisting mainly of" and "consisting of".

Within the scope of the present invention, the term "optionally" means that an event or condition being described may or may not occur, and that the description includes cases in which said event or condition occurs and cases in which it does not.

Within the scope of the present invention, the terms "oils" and "fats" will be used interchangeably.

According to the present invention, the edible, water-in-oil (W/O) emulsified product comprises from 60.0 to 98.0 weight percent [hereafter wt. %] of a fat phase, and 2.0 to 40.0 wt. % of aqueous phase, relative to the total weight of the edible, water-in-oil W/O emulsified product, wherein the fat phase comprises from 50.0 to 100.0 wt. % of a hardstock phase and at most 50.0 wt. % of at least one first liquid oil, wherein the hardstock phase comprises at least one fully hardened fat and wherein the hardstock phase comprises from 80.0 to 100.0 wt. % of an interesterified hardstock phase and at most 20.0 wt. % of a non-interesterified hardstock phase, and wherein the fat phase contains, relative to the total weight of all fatty acid residues in the fat phase:
a) at most 5.0 wt. % of saturated C12 fatty acid residues (C12:0),
b) at most 10.0 wt. % of saturated C16 fatty acid residues (C16:0),
c) less than 3.0 wt. % of trans fatty acid residues (TFA),
and wherein the fat phase is further characterized by:
d) a solid fat content (SFC) at 10 °C (SFC10) from 30.0 to 70.0 %,
e) an SFC value at 20 °C (SFC20) from 20.0 to 50.0 %,
f) an SFC value at 40 °C (SFC40) from 0.0 to 25.0 %,
wherein the SFC values are measured according to the standard method AOCS Cd 16b-93,
and wherein the hardstock phase contains, relative to the total weight of all fatty acid residues in the hardstock phase:
g) 35.0 to 65.0 wt. % of saturated C18 fatty acid residues (C18:0),
h) 25.0 to 50.0 wt. % of mono-unsaturated C18 fatty acid residues (C18:1), and
i) at most 25.0 wt. % of poly-unsaturated C18 fatty acid residues (C18:2 and C18:3).

The inventors have surprisingly found that the specific presence of the fat phase, as described above, and as comprised in the edible, water-in-oil (W/O) emulsified product according to the present invention, allows an optimal functionality to be achieved in terms of plasticity and texture, combined with a favorable nutritional profile and favorable organoleptic characteristics, in particular when said product is used as a bakery margarine, more in particular as a laminating margarine, in the preparation of puff pastry products or viennoiserie products such as croissants. Furthermore, there is no longer any need to use tropical oils or fats, since it is now possible to work with low amounts of the saturated C12 fatty acid residues (C12:0) and the saturated C16 fatty acid residues (C16:0) as comprised in the fat phase. Moreover, palmitic acid (C16:0) is known as an atherogen.

The fat phase, as described above, and as comprised in the edible, water-in-oil (W/O) emulsified product according to the present invention, is also characterized in that the fat phase comprises less than 3.0 wt. % of trans fatty acid residues (TFA), relative to the total weight of all fatty acid residues in the fat phase, which benefits the nutritional profile.

The fat phase, as described above, and as comprised in the edible, water-in-oil (W/O) emulsified product according to the present invention, is also characterized by a particular SFC profile, being an SFC10 from 30.0 to 70.0 %, an SFC20 from 20.0 to 50.0 %, and an SFC40 from 0.0 to 25.0 %, relative to the fat phase, wherein the SFC values are measured according to the standard method AOCS Cd 16b-93. This SFC profile is indicative of the content of crystals that the fat phase is able to form in the water-in-oil emulsified product in a relevant range of temperatures for storage, processing, and consumption.

In the standard method AOCS Cd 16b-93, the solid fat content (SFC) (SFC10, SFC20, SFC30, SFC35, SFC40) of the fat phase is measured via pulse NMR, as known in general to the person skilled in the art. The preferred stabilization profile to be used is described in the experimental section, where the fat phase is heated to a temperature of 80 degrees Celsius and is maintained at 80 degrees Celsius for 15 minutes, subsequently the fat phase is maintained at 60 degrees Celsius or higher for at least 10 minutes, subsequently the fat phase is maintained at 0 degrees Celsius for 1 hour, and then at the measurement temperature for 30 minutes. The solid fat content (%) determined by the low resolution NMR is defined as the ratio between the response received from the hydrogen nuclei in the solid phase and the response coming from all hydrogen nuclei in the sample. No correction is applied for variations in the proton density between solid and liquid phase.

However, contrary to what was thought in the prior art, e.g. WO 96/14755 A1, it is not sufficient that the fat phase meets the above-mentioned SFC restrictions in order to produce a high-quality bakery margarine. The inventors have now surprisingly found that the presence of an excessive amount of poly-unsaturated C18 fatty acid residues (C18:2 and C18:3) in the hardstock phase, as comprised in the fat phase, results in a crumbly and non-plastic edible, water-in-oil (W/O) emulsified product during its storage, thereby subsequently making said emulsified product no longer suitable for use as bakery margarine. Therefore, the inventors have now particularly found that the summed content of poly-unsaturated C18 fatty acid residues (C18:2 and C18:3) as contained in the hardstock phase should not exceed 25.0 wt. %, and the content of mono-unsaturated C18 fatty acid residues (C18:1) should be between 25.0 to 50.0 wt. %, relative to the total weight of all fatty acid residues in the hardstock phase. In addition, the content of saturated C18 fatty acid residues (C18:0) as contained in the hardstock phase should be between 35.0 to 65.0 wt. %, relative to the total weight of all fatty acid residues in the hardstock phase.

In the edible, water-in-oil (W/O) emulsified product according to the present invention, the fat phase preferably contains at most 3.0 wt. % of saturated C12 fatty acid residues (C12:0), more preferably at most 2.0 wt. %, most preferably at most 1.0 wt. %, relative to the total weight of all fatty acid residues in the fat phase.

In the edible, water-in-oil (W/O) emulsified product according to the present invention, the fat phase preferably contains at most 9.0 wt. % of saturated C16 fatty acid residues (C16:0), more preferably at most 8.0 wt. %, most preferably at most 7.0 wt. %, relative to the total weight of all fatty acid residues in the fat phase.

In the edible, water-in-oil (W/O) emulsified product according to the present invention, the fat phase preferably contains less than 2.0 wt. % of trans fatty acid residues (TFA), more preferably less than 1.0 wt. %, relative to the total weight of all fatty acid residues in the fat phase.

In the edible, water-in-oil (W/O) emulsified product according to the present invention, the fat phase is preferably characterized by an SFC10 from 35.0 to 60.0 %, more preferably from 40.0 to 55.0 %, most preferably from 40.0 to 50.0 %, relative to the total fat phase.

In the edible, water-in-oil (W/O) emulsified product according to the present invention, the fat phase is preferably characterized by an SFC20 from 25.0 to 50.0 %, more preferably from 35.0 to 50.0 %, relative to the total fat phase.

In the edible, water-in-oil (W/O) emulsified product according to the present invention, the fat phase is preferably characterized by an SFC40 from 5.0 to 25.0 %, more preferably from 5.0 to 20.0 %, most preferably from 12.0 to 20.0 %, relative to the total fat phase.

Each of the SFC10, SFC20, SFC30, SFC35 and SFC40 values is measured in accordance with the standard method AOCS Cd 16b-93.

In the edible, water-in-oil (W/O) emulsified product according to the present invention, the fat phase is preferably characterized by a difference in SFC value at 10°C (SFC10) versus at 40 °C (SFC40), i.e., SFC10-SFC40, of at least 23.0 %, preferably at least 25.0 %, most preferably at least 27.0 %.

According to certain preferred embodiments of the edible, water-in-oil (W/O) emulsified product according to the present invention, the fat phase preferably contains from 35.0 to 55.0 wt. % of saturated fatty acid residues (SAFA), more preferably from 40.0 to 55.0 wt. %, most preferably from 45.0 to 55.0 wt. %, relative to the total weight of all fatty acid residues in the fat phase. This SAFA profile balances on the one hand favorable nutritional characteristics of the edible, water-in-oil (W/O) emulsified product in which the fat phase is present, and favorable organoleptic characteristics of the final baked products comprising said edible, water-in-oil (W/O) emulsified products; and on the other hand obtaining a good balance between plasticity, texture and hardness of the edible, water-in-oil (W/O) emulsified product in which the fat phase is present.

Within the scope of the present invention, it should be understood that the term "SAFA" refers to saturated fatty acid residues, which are fatty acid residues with single bonds between the carbon atoms of the fatty acid chain.

In order to meet the characteristics of the fat phase described above relating to C12:0, C16:0, TFA, SFC10, SFC20, and SFC40, the fat phase, as described above, comprises from 50.0 to 100.0 wt. % of a hardstock phase and at most 50.0 wt. % of at least one first liquid oil, relative to the total weight of the fat phase. Furthermore, said hardstock phase comprises from 80.0 to 100.0 wt. % of an interesterified hardstock phase and at most 20.0 wt. % of a non-interesterified hardstock phase.

According to a preferred embodiment, the hardstock phase consists for 100.0 wt. % of an interesterified hardstock phase.

Within the scope of the present invention, it should be understood that the term "hardstock phase" refers to a phase in which all fat components have a melting point of more than 25 °C. This hardstock phase serves the function of providing texture to the edible, water-in-oil (W/O) emulsified product and stabilizing the emulsion.

Within the scope of the present invention, the expression "an interesterified hardstock phase" is intended as referring to a phase consisting of one or more than one interesterified hardstock component. This means that mixtures of interesterified hardstock components may also be used in the context of the fat phase as comprised in the edible, water-in-oil (W/O) emulsified product of the present invention.

Within the scope of the present invention, the expression "a non-interesterified hardstock phase" is intended as referring to a phase consisting of one or more than one non-interesterified hardstock component. This means that mixtures of non-interesterified hardstock components may also be used in the context of the fat phase as comprised in the edible, water-in-oil (W/O) emulsified product of the present invention.

Within the scope of the present invention, it should also be understood that the interesterification of a hardstock component for obtaining an interesterified hardstock component may be carried out according to known methods, both chemically (non-selective randomization), for example through the use of sodium methoxide as a catalyst, and enzymatically, with optional selective and positional specificity, for example through the use of lipase. Interesterification is a known technique for a person skilled in the field of organic chemistry and oleochemistry, with the aim of rearranging (i.e., redistributing) the fatty acids present on the glycerol base structure. The interesterification may then be followed by one or more washing steps, one or more bleaching steps and/or deodorization steps. Preferably, the interesterification is a chemical interesterification with the aim of non-selectively randomizing the fatty acids in the at least one hardstock.

According to a preferred embodiment of the edible, water-in-oil (W/O) emulsified product according to the present invention, after interesterification, the interesterified hardstock phase, as detailed above, is not subjected to at least one fractionation step.

Preferably, the fat phase comprises from 60.0 to 100.0 wt. %, or from 70.0 to 100.0 wt. %, or from 80.0 to 98.0 wt. %, or from 85.0 to 95.0 wt. % of the hardstock phase, relative to the total weight of the fat phase.

Within the scope of the present invention, it is therefore possible, on the one hand, for the fat phase to comprise, in addition to the amount of the hardstock phase, an amount of at least one first liquid oil. On the other hand, it is also possible within the scope of the present invention for the fat phase to comprise, in addition to the amount of the hardstock phase, no at least one first liquid oil.

According to a preferred embodiment, the fat phase as comprised in the edible, water-in-oil (W/O) emulsified product according to the present invention, comprises, if present, from 1.0 to 50.0 wt. % of at least one first liquid oil, relative to the total weight of the fat phase.

Within the scope of the present invention, it should be understood that the term "liquid oil" or "liquid fat" refers to an oil or fat having a melting point of 25 °C or less.

Within the scope of the present invention, the expression "at least one first liquid oil" is intended as referring to one or more than one first liquid oil. Mixtures of first liquid oils may also be used in the context of the fat phase as comprised in the edible, water-in-oil (W/O) emulsified product of the present invention.

In the description, the expression "first liquid oil" is hereafter understood, within the scope of the present invention, both in the plural and in the singular sense, which means that the fat phase as comprised in the edible, water-in-oil (W/O) emulsified product of the present invention may comprise one or more than one first liquid oil.

Within the scope of the present invention, the expression "at most 50.0 wt. % of at least one first liquid oil" refers to the amount first liquid oil when the fat phase contains no first liquid oil, or contains only one first liquid oil, or to the sum of the amounts of first liquid oil when the fat phase contains more than one first liquid oil. This means that, when more than one first liquid oil is present, it will then necessarily be the sum of the amounts of each of the first liquid oil that is in the range of at most 50.0 wt. %, relative to the total weight of the fat phase.

Preferably, the fat phase comprises from 1.0 to 40.0 wt. %, or from 1.0 to 30.0 wt. %, or from 2.0 to 20.0 wt. %, or from 5.0 to 15.0 wt. % of the at least one first liquid oil, relative to the total weight of the fat phase.

According to a preferred embodiment, the at least one first liquid oil, if present and comprised in the fat phase, as described above, is selected from the group consisting of corn oil, soybean oil, safflower oil, sunflower oil, rapeseed oil, linseed oil, cottonseed oil, grapeseed oil, and the like, and/or fractions thereof, or combinations thereof, as well as varieties of these oils, such as for example sunflower oil having an increased content of oleic acid and rapeseed oil having a decreased content of linolenic acid.

As described above, the hardstock phase comprises at least one fully hardened fat.

Within the scope of the present invention, it should be understood that the term "a fully hardened fat" refers to a fat that has been fully hydrogenated and wherein the TFA content in the fully hardened fat is less than 3.0 wt. %, preferably less than 2.0 wt. %, more preferably less than 1.0 wt. %, relative to the total weight of all fatty acid residues of the fully hardened fat.

According to a preferred embodiment of the edible, water-in-oil (W/O) emulsified product according to the present invention, at least one interesterified hardstock component in the interesterified hardstock phase, as described above, comprises at least one fully hardened fat. This means that at least one interesterified hardstock component comprised in the interesterified hardstock phase is obtained by interesterification of a hardstock component comprising at least one fully hardened fat.

Within the scope of the present invention, the expression "at least one fully hardened fat" is intended as referring to one or more than one fully hardened fat. In the description, the expression "fully hardened fat" is hereafter understood, within the scope of the present invention, both in the plural and in the singular sense, which means that the hardstock phase may comprise one or more than one fully hardened fat.

According to another preferred embodiment of the edible, water-in-oil (W/O) emulsified product according to the present invention, at least one interesterified hardstock component in the interesterified hardstock phase, as described above, comprises at least one fully hardened fat and at least one second liquid oil. This means that at least one interesterified hardstock component comprised in the interesterified hardstock phase is obtained by interesterification of a hardstock component containing a mixture of at least one fully hardened fat and at least one second liquid oil.

Within the scope of the present invention, the expression "at least one second liquid oil" is intended as referring to one or more than one second liquid oil.

In the description, the expression "second liquid oil" is hereafter understood, within the scope of the present invention, both in the plural and in the singular sense, which means that the hardstock phase may comprise one or more than one second liquid oil.

According to a preferred embodiment, the at least one fully hardened fat is obtained by subjecting an oil to a process of fully hardening by means of hydrogenation, wherein the oil is selected from the group consisting of corn oil, soybean oil, safflower oil, sunflower oil, rapeseed oil, and the like, and/or fractions thereof, or combinations thereof, as well as varieties of these oils, such as for example sunflower oil having an increased content of oleic acid and rapeseed oil having a decreased content of linolenic acid, wherein, more preferably, the oil is selected from the group consisting of sunflower oil and rapeseed oil, and/or fractions thereof, or combinations thereof, as well as varieties of these oils, such as for example sunflower oil having an increased content of oleic acid and rapeseed oil having a decreased content of linolenic acid.

According to a preferred embodiment, the at least one second liquid oil, if present, is selected from the group consisting of sunflower oil having an increased content of oleic acid, rapeseed oil, olive oil, and/or fractions thereof, or combinations thereof, as well as varieties of these oils, such as for example rapeseed oil having a decreased content of linolenic acid.

In general, the nature and the amounts of the at least one fully hardened fat, as described above, and the at least one second liquid oil, as described above, as comprised in the hardstock phase, should be selected in such a way that the hardstock phase will contain, relative to the total weight of all fatty acid residues in the hardstock phase:
g) 35.0 to 65.0 wt. % of saturated C18 fatty acid residues (C18:0),
h) 25.0 to 50.0 wt. % of mono-unsaturated C18 fatty acid residues (C18:1), and
i) at most 25.0 wt. % of poly-unsaturated C18 fatty acid residues (C18:2 and C18:3).

The inventors have found that the specific presence of the saturated C18 fatty acid residues (C18:0) allows a favorable structure to be obtained in the edible, water-in-oil (W/O) emulsified product according to the present invention in terms of plasticity and texture, without compromising the nutritional quality of said emulsified product. Unlike the majority of other saturated fatty acid residues, stearic acid (C18:0) has a neutral effect on the level of cholesterol in the blood.

Furthermore, the presence of unsaturated fatty acid residues is expected to contribute the plasticity and flexibility of the edible, water-in-oil (W/O) emulsified product, which in turn contributes to the suitability of said emulsified product for use as a bakery margarine, in particular a laminating margarine. Thus, it is for example known from EP 0 502 700 that the presence of an increased content of linoleic acid (C18:2) resulting from an interesterified mixture of a fully hardened soy oil and safflower oil confers an additional flexibility to chocolate products. However, the inventors have now surprisingly found that the presence of a too large amount of poly-unsaturated C18 fatty acid residues (C18:2 and C18:3) in the at least one hardstock, as described above, directly gives rise to a crumbly and non-plastic edible, water-in-oil (W/O) emulsified product during its storage, thus making said emulsified product no longer suitable for use as a bakery margarine, in particular a laminating margarine, as described in detail in the experimental section.

In the edible, water-in-oil (W/O) emulsified product according to the present invention, the hardstock phase, as described above, preferably contains from 40.0 to 60.0 wt. %, more preferably from 40.0 to 55.0 wt. % of saturated C18 fatty acid residues (C18:0), relative to the total weight of all fatty acid residues in the hardstock phase.

In the edible, water-in-oil (W/O) emulsified product according to the present invention, the hardstock phase, as described above, preferably contains from 28.0 to 50.0 wt. % of mono-unsaturated C18 fatty acid residues (C18:1), more preferably from 32.0 to 50.0 wt. %, most preferably from 35.0 to 50.0 wt. %, relative to the total weight of all fatty acid residues in the hardstock phase.

In the edible, water-in-oil (W/O) emulsified product according to the present invention, the hardstock phase, as described above, preferably contains at most 22.0 wt. % of poly-unsaturated C18 fatty acid residues (C18:2 and C18:3), more preferably at most 20.0 wt. %, most preferably at most 18.0 wt. %, relative to the total weight of all fatty acid residues in the hardstock phase.

In the edible, water-in-oil (W/O) emulsified product according to the present invention, the hardstock phase, as described above, preferably contains saturated C16 fatty acid residues (C16:0) and saturated C18 fatty acid residues (C18:0) in a weight ratio of (C16:0)/(C18:0) less than 0.20, preferably less than 0.18, more preferably less than 0.16, most preferably less than 0.15.

Preferably, the total of fully hardened fats in said hardstock phase, as described above, constitutes 35.0 to 65.0 wt. %, and the total of second liquid oils in the same hardstock phase constitutes 65.0 wt. % to 35.0 wt. %, preferably the total of fully hardened fats in said hardstock phase being 40.0 wt. % to 60.0 wt. %, and the total of second liquid oils in the same hardstock phase being 60.0 wt. % to 40.0 wt. %.

According to an embodiment, in the edible, water-in-oil (W/O) emulsified product according to the present invention, the hardstock phase, as described above, preferably has a melting point of at least 45 °C. This melting point can be determined by standard methods generally known to the person skilled in the art, the melting point preferably being determined according to the standard AOCS method, Cc 3-25. The inventors have surprisingly found that, in contrast to retail applications, water-in-oil (W/O) emulsions for bakery applications should contain a sufficient content of higher-melting triglycerides to obtain a hard texture. In retail applications, such higher contents of higher-melting triglycerides are generally undesirable.

According to certain embodiments, in the edible, water-in-oil (W/O) emulsified product according to the present invention, the hardstock phase, as described above, preferably has a melting point of less than 65 °C, more preferably a melting point of less than 60 °C. This melting point can be determined by standard methods generally known to the person skilled in the art, the melting point preferably being determined according to the standard AOCS method, Cc 3-25.

The inventors have surprisingly found that these melting point restrictions of the hardstock phase, as detailed above, result in an optimal content of high-melting triglycerides as contained in the hardstock phase, thereby allowing the production of margarines with sufficient hardness, in particular related to the processing of said margarines at temperatures above 10 °C. In particular, the inventors have surprisingly found that if the hardstock phase contains an optimal content of high-melting triglycerides, an optimal functionality in terms of plasticity and texture is achieved, without adversely affecting the organoleptic properties of the final edible, water-in-oil (W/O) emulsified product. With regard to spread margarines, the presence of higher-melting triglycerides is generally undesirable because of the adverse effects on spreadability and mouthfeel, as also described in WO 96/14755 A1, as detailed above, in which the interesterified hardstock is, i.e. after interesterification, always subjected to a subsequent fractionation step to remove the higher-melting stearin fraction.

According to certain embodiments, it is therefore possible for the edible, water-in-oil (W/O) emulsified product of the present invention to contain further additional ingredients such as emulsifiers, water soluble components and/or fat soluble components.

Non-limiting examples of such emulsifiers are mono- and diglycerides of fatty acids, lecithin, polyglycerol esters, mono- and diglycerides of fatty acids esterified with acetic acid, citric acid, lactic acid, acetic acid, tartaric acid or mono- and diacetyl tartaric acid.

Non-limiting examples of such water soluble components other than the emulsifiers are vegetable and/or animal protein components or a protein component derived from fungi, salt, vitamins, aromas, acidity regulators, preservatives, and thickeners.

Non-limiting examples of such fat soluble components other than the emulsifiers are colorants, aromas, antioxidants, and vitamins.

According to certain embodiments, the edible, water-in-oil (W/O) emulsified product according to the present invention comprises at most 8.0 wt. % of these additional ingredients, as described above, preferably at most 5.0 wt. %, more preferably at most 3.0 wt. % relative to the total weight of the edible, water-in-oil W/O emulsified product.

According to a further preferred embodiment, the edible, water-in-oil (W/O) emulsified product according to the present invention comprises no components of animal origin.

According to a preferred embodiment, the edible, water-in-oil (W/O) emulsified product according to the present invention preferably comprises substantially no tropical fats or oils. Tropical fats or oils preferably refers to fats or oils selected from the group of palm oil, palm kernel oil, coconut oil, shea butter, and cocoa butter and the like, and/or fractions thereof, or combinations thereof.

Within the scope of the present invention, the expression "substantially no tropical fats or oils" is intended to mean that the edible, water-in-oil (W/O) emulsified product, as described above, comprises at most 5 wt. % of tropical fats, more preferably at most 3 wt. %, most preferably at most 1 wt. %, relative to the total weight of the edible, water-in-oil (W/O) emulsified product.

According to a further preferred embodiment, the edible, water-in-oil (W/O) emulsified product according to the present invention preferably comprises no tropical fats or oils, as described above.

According to a preferred embodiment of the present invention, the edible, water-in-oil (W/O) emulsified product comprises from 65.0 to 90.0 wt. % of the fat phase, as described above, and from 10.0 to 35.0 wt. % of the aqueous phase, as described above, relative to the total weight of the edible, water-in-oil (W/O) emulsified product.

According to another preferred embodiment of the present invention, the edible, water-in-oil (W/O) emulsified product comprises from 70.0 to 85.0 wt. % of the fat phase, as described above, and from 15.0 to 30.0 wt. % of the aqueous phase, as described above, relative to the total weight of the edible, water-in-oil (W/O) emulsified product.

Within the scope of the present invention, the edible, water-in-oil (W/O) emulsified product, as described above, is suitable for use as a bakery margarine, in particular as a laminating margarine. For the purpose of the present invention, it is clear that shortenings are not comprised in this definition of the edible, water-in-oil (W/O) emulsified product.

Within the scope of the present invention, the term "margarine" is intended to refer to a product that is broader than the strictly legal definition. The term "margarine" is legally defined as an edible, solid water-in-oil (W/O) emulsion having at least a fat content of 80 wt. % and at most a fat content of 90 wt. %. However, in recent years, industrial bakeries have increasingly used margarines characterized by a lower fat content, particularly in the context of cost reduction and nutritional optimization. For this reason, in the present document, water-in-oil (W/O) emulsions characterized by such a lowered fat content are also considered to be margarines.

A "bakery margarine" is a margarine suitable for bakery applications. Such a bakery margarine serves a specific function in the preparation of baked products comprising said bakery margarine. Bakery margarines are generally harder than the so-called spreads or spreadable margarines. Some bakery margarines may for example be used for the preparation of cakes, while other bakery margarines can be used for the preparation of puff pastry products or other bakery applications, in particular baked bakery products.

Within the scope of the present invention, the term "extruded bakery margarine" is intended to refer to a bakery margarine produced by extrusion from a B unit, which therefore at this point has sufficient consistency to be wrapped as a plate or block in a wrapper while keeping its shape, in particular during transport and/or storage with minimal support.

In general, the term "laminating fat composition" is intended to refer to an edible product containing a continuous fat phase, said product being usable in laminating applications. A laminating fat composition may, but does not have to consist solely of the continuous fat phase. Thus, a bakery margarine that is suitable for use in laminating applications is also an example of a laminating fat composition.

The term "laminating application" generally refers to an application in which a dough is prepared with a layered structure and in which layers of dough are separated by layers of laminating fat composition. The microstructural separation of the different layers gives rise to a flaky structure in the baked end product, earning it the name "laminated bakery product".

Within the scope of the present invention, the term "laminating application" is intended to refer to an application in which a laminated dough is prepared with layered structure and in which alternating layers of dough and a laminating fat composition are used. In other words, one or more layers of dough are separated by one or more layers of laminating fat composition. The microstructural separation of the different and alternating layers of dough and laminating fat composition gives rise to a flaky structure in the baked product (i.e., laminated bakery product) that results from baking the prepared laminated dough.

According to certain embodiments, the edible, water-in-oil (W/O) emulsified product, as described above, is further characterized by a specific hardness. In general, the hardness of W/O emulsified products plays a decisive role in the functionality and processability of the margarine, and is determined to a large extent by the properties of the crystal network in the fat phase.

The hardness of a water-in-oil emulsion may be measured by methods known to the person skilled in the art. For example, the hardness of a water-in-oil emulsion may be measured using a penetrometer.

Within the scope of the present invention, the hardness of the edible, water-in-oil (W/O) emulsified product, as described above, is preferably measured after the edible, water-in-oil (W/O) emulsified product op has been stabilized for a specific predefined period of time at a specific predefined temperature using a Brookfield CTX Texture Analyzer equipped with a cylindrical probe having a 4.0 mm diameter, a probe penetration rate of 2 mm/sec, a trigger force of 2 g, over a distance of 10 mm. Next, the required peak force is read out and expressed in g. The average hardness value is determined based on at least 3 measurements.

According to a preferred embodiment of the present invention, the edible, water-in-oil (W/O) emulsified product, as described above, is a bakery margarine having a hardness ranging from 400 to 1400 g, wherein the hardness is measured in accordance with the above-mentioned method based on the Brookfield CTX Texture Analyzer after the edible, water-in-oil (W/O) emulsified product has been stabilized for 48 hours at a temperature of 15 °C.

According to a further preferred embodiment of the present invention, the edible, water-in-oil (W/O) emulsified product, as described above, is a laminating margarine having a hardness ranging from 700 to 1400 g, wherein the hardness is measured in accordance with the above-mentioned method based on the Brookfield CTX Texture Analyzer after the edible, water-in-oil (W/O) emulsified product has been stabilized for 48 hours at a temperature of 15 °C.

The present invention also provides a method for producing said edible, water-in-oil (W/O) emulsified products, as described above.

Furthermore, it should be understood that all definitions and preferences as described above also apply to the method for producing said edible, water-in-oil (W/O) emulsified products, as described above, and all further embodiments, as described below.

For producing the edible, water-in-oil (W/O) emulsified product according to the present invention, several methods may be used appropriately.

In general, edible, water-in-oil (W/O) emulsified products, in particular bakery margarines, more in particular laminating margarines, are prepared according to processes known to the person skilled in the art comprising the following steps:
1. mixing a hardstock phase, and optionally liquid oil, with an aqueous phase, at a temperature where the structuring fat is at least partly, preferably entirely, in a liquid state;
2. cooling the mixture formed in Step 1 under high shear so as to induce crystallization of the structuring fat for forming an emulsion;
3. forming a crystal network so as to stabilize the emulsion formed in Step 2.

The above steps are usually carried out in a process using a margarine production line that allows the ingredients, i.e., the components as comprised in edible, water-in-oil (W/O) emulsified products, to be heated, cooled, and mechanically processed.

Within the scope of the present invention, the term "a margarine production line" refers to a production line consisting of traditional margarine processing units, more in particular to an arrangement comprising at least one pump, at least one A unit and at least one B unit, and optionally at least one C unit, wherein the A unit, B unit, and C unit are known to the person skilled in the art. The number and order of the at least one A unit and the at least one B unit, and optionally the at least one C unit, may be varied in function of the desired properties of the edible, water-in-oil (W/O) emulsified product of the present invention. An A unit refers to a scraped surface heat exchanger for cooling a water-in-oil (W/O) emulsion under high shear. The A unit ensures a rapid cooling and crystallization of the structuring fat during its residence time in the A unit. A B unit refers to a (hollow) tube in which the crystallized water-in-oil (W/O) emulsion can further harden, causing the crystal network to increase in strength, prior to extrusion of the water-in-oil (W/O) emulsified product. A B unit may be provided with one or more sieve plates and may consist of one or more tubular legs. A C unit refers to a crystallizer or rotary pin worker for carrying out a crystallization step, in which rotating pins perform a mechanical operation.

The method for producing the edible, water-in-oil (W/O) emulsified product, as described above, preferably comprises the following steps, relative to the total weight of the edible, water-in-oil (W/O) emulsified product:
1. providing a water-in-oil (W/O) emulsion by mixing:
   a) 60.0 to 98.0 wt. % of a fat phase, as described above, preferably from 65.0 to 90.0 wt. %, more preferably from 70.0 to 85.0 wt. %;
   b) 2.0 to 40.0 wt. % of an aqueous phase, preferably from 10.0 to 35.0 wt. %, more preferably from 15.0 to 30.0 wt. %;
   wherein the mixing is carried out at a temperature at which the fat phase is at least partly, preferably entirely, in a molten state so as to form the water-in-oil (W/O) emulsion;
2. processing the water-in-oil (W/O) emulsion formed in Step 1 in a margarine production line comprising at least one pump, at least one A unit and at least one B unit so as to form the edible, water-in-oil (W/O) emulsified product.

Within the scope of the present invention, it should be understood that Step 1 of the method for producing the edible, water-in-oil (W/O) emulsified product, as described above, both refers to the mixing of the fat phase, as described above, which may first be prepared in its entirety prior to said fat phase being mixed with the aqueous phase; and refers to the mixing of parts of the fat phase with the aqueous phase or parts of the aqueous phase.

According to an embodiment of Step 1.a) of the method for producing the edible, water-in-oil (W/O) emulsified product, as described above, the fat phase may be prepared by mixing 50.0 to 100.0 wt. % of a hardstock phase, as described above, with at most 50.0 wt. % of at least one first liquid oil, as described above.

According to a preferred embodiment of Step 1.a) of the method for producing the edible, water-in-oil (W/O) emulsified product, as described above, the hardstock phase, as described above, may be prepared by mixing 80.0 to 100.0 wt. % of one or more than one interesterified hardstock component, as described above, with at most 20.0 wt. % of one or more than one non-interesterified hardstock component, as described above, wherein at least one interesterified hardstock component is prepared by interesterification of a hardstock component comprising at least one fully hardened fat optionally mixed with at least one second liquid oil, as described above.

According to this preferred embodiment of Step 1.a) of the method for producing the edible, water-in-oil (W/O) emulsified product, as described above, the total of fully hardened fats in said hardstock phase, as described above, constitutes 35.0 wt. % to 65.0 wt. %, and the total of second liquid oils in the same hardstock phase constitutes 65.0 wt. % to 35.0 wt. %, preferably the total of fully hardened fats in said hardstock phase being 40.0 wt. % to 60.0 wt. %, and the total of second liquid oils in the same hardstock phase being 60.0 wt. % to 40.0 wt. %.

According to an embodiment of Step 1.a) of the method for producing the edible, water-in-oil (W/O) emulsified product, as described above, the fat phase may be prepared by mixing the hardstock phase, as described above, optionally the at least one first liquid oil, as described above, and one or more fat soluble components and/or emulsifiers as additional ingredients, as described above and if present.

According to an embodiment of Step 1.b) of the method for producing the edible, water-in-oil (W/O) emulsified product, as described above, the aqueous phase may be prepared by mixing water and the one or more water soluble components as additional ingredients, as described above and if present.

According to an embodiment of the method for producing the edible, water-in-oil (W/O) emulsified product, as described above, the margarine production line further comprises at least one C unit.

According to a preferred embodiment of the method for producing the edible, water-in-oil (W/O) emulsified product, as described above, the margarine production line comprises at least one B unit as a final processing unit.

Step 1 of the method for producing the edible, water-in-oil (W/O) emulsified product, as described above, is preferably carried out at a temperature ranging from 40.0 to 70.0 °C, more preferably ranging from 45.0 to 60.0 °C.

According to a preferred embodiment, the method for producing the edible, water-in-oil (W/O) emulsified product, as described above, preferably comprises a further Step 3 comprising the extrusion of the edible, water-in-oil (W/O) emulsified product formed in Step 2. Preferably, the extruded edible, water-in-oil (W/O) emulsified product formed in Step 3 is subsequently wrapped and stored, such as for example in a wrapper at a temperature of 15 °C.

In general, as relates to the margarine production line in Step 2 of the method for producing the edible, water-in-oil (W/O) emulsified product, as described above, the number and order of the processing units used may be varied in the margarine production line according to the intended production capacity and the desired properties of the edible, water-in-oil (W/O) emulsified product of the present invention.

Within the scope of the present invention, the number of A units deployed in the margarine production line in Step 2 of the method for producing the edible, water-in-oil (W/O) emulsified product, as described above, is determined by, among other things, the volume capacity of these A units, the targeted throughput, as well as the desired cooling temperatures of the water-in-oil (W/O) emulsion formed in Step 1, as described above. The number of A units deployed in the margarine production line may vary from 1 to 10.

If so desired, the at least one A unit in the margarine production line may be followed by one or more C units.

Preferably, the total residence time in the at least one A unit is in the rage of from 15 to 120 seconds, or from 20 to 100 seconds, or from 30 to 80 seconds.

Preferably, the total residence time in the at least one B unit is in the rage of from 200 to 2400 seconds, or from 250 to 2000 seconds, or from 300 to 1800 seconds.

Preferably, the total residence time in the at least one C unit, if present, is at most 600 seconds, or at most 500 seconds, or at most 450 seconds.

Non-limiting examples of suitable line configurations of the margarine production line in Step 2 of the method for producing the edible, water-in-oil (W/O) emulsified product, as described above, and downstream from the pump, are: AᵥB_{w}, AᵥC_{w}Bₓ, AᵥC_{w}AₓB_{y}, AᵥC_{w}AₓC_{y}B_{z}, wherein the letter v, w, x, y, z in subscript is an integer corresponding to the number of serially arranged processing units of a same type. Thus, for example, A₃B₁ corresponds to 3 serially arranged A units followed by 1 B unit, i.e. the margarine production line having an AAAB line configuration.

The present invention also provides the use of the edible, water-in-oil (W/O) emulsified product, as described above, for the preparation of a dough, in particular a laminated dough.

For the preparation of a dough, in particular a laminated dough, containing such edible, water-in-oil (W/O) emulsified products, various methods may be used appropriately. Such a dough, in particular such a laminated dough, is also an object of the present invention.

Furthermore, it should be understood that all definitions and preferences as described above also apply to the dough comprising the edible, water-in-oil (W/O) emulsified product, as described above, and all further embodiments, as described below.

If so desired, the dough comprising the edible, water-in-oil (W/O) emulsified product according to the present invention may, depending on the edible, water-in-oil (W/O) emulsified product being used as a bakery margarine or as a laminating margarine, further comprise one or more additional ingredients in amounts which are known to the person skilled in the art. Non-limiting examples of such additional ingredients are water, salt, sugar, baking powder, eggs, dough margarine, and milk powder.

The present invention also provides baked bakery products obtained by baking the dough or the laminated dough comprising said edible, water-in-oil (W/O) emulsified product, as described above.

Non-limiting examples of such baked products are cakes, waffles, biscuits, puff pastry, viennoiserie products such as for example croissants, and the like.

The present invention will be further illustrated by the examples and comparative examples below.

### 4. Examples

All mixing ratios, contents and concentrations in this text are given in units of weight and weight percent, unless stated otherwise.

### Methods of analysis

The following methods of analysis below were used for determining composition and concentration of the fatty acid residues, the solid fat content (SFC) of the fat phase, and if applicable, of the hardstock phase as comprised therein, wherein the fat phase is comprised in the final edible, water-in-oil (W/O) emulsified product obtained, as well as the concentration of crystalline fat in the edible, water-in-oil (W/O) emulsified product. The method of analysis regarding hardness is used for determining the hardness of the final edible, water-in-oil (W/O) emulsified product obtained. The method of analysis regarding melting point is used for determining the melting point of the hardstock phase, wherein the hardstock phase is comprised in the fat phase and wherein the fat phase is comprised in the final edible, water-in-oil (W/O) emulsified product obtained.

### Determination of SFC:

The solid fat content (SFC) and associated SFC values (SFC10, SFC20, SFC30, SFC35, SFC40) are measured and determined according to the standard method AOCS Cd 16b-93. In particular, the solid fat content (SFC) (SFC10, SFC20, SFC30, SFC35, SFC40) of the fat phase is measured via pulse NMR, as known in general to the person skilled in the art. The stabilization profile used is heating to a temperature of 80 degrees Celsius, and maintaining at 80 degrees for 15 minutes, wherein the fat phase is then maintained at 60 degrees Celsius or higher for at least 10 minutes, the fat phase is maintained at 0 degrees Celsius for 1 hour, and then at the measurement temperature for 30 minutes.

### Concentration of crystalline fat in the edible, water-in-oil (W/O) emulsified product:

The concentration of crystalline fat in the edible, water-in-oil (W/O) emulsified product is determined after stabilization and equilibration of the edible, W/O emulsified product for 48 hours at 15 °C. More in particular, the concentration of crystalline fat in the edible, W/O emulsified product is determined by taking a sample from the edible, water-in-oil (W/O) emulsified product thus stored and preserved using a metal plunger, and then transferring said sample to a glass NMR tube. The content of crystalline fat in the W/O emulsified product is then immediately measured using pulse NMR (15 °C).

### Determination of fatty acid composition:

The composition of the fatty acid residues as comprised in the fat phase and in the hardstock phase as comprised therein is determined according to the standard method AOCS Official Method Ce 1f-96, Revised 2017.

### Determination of hardness:

The hardness of the edible, water-in-oil (W/O) emulsified product is determined after stabilizing the edible, W/O emulsified product for 48 hours at 15 °C. More in particular, the hardness of the edible, water-in-oil (W/O) emulsified product is immediately measured using a Brookfield CTX Texture Analyzer equipped with a cylindrical probe having a 4.0 mm diameter. After achieving a trigger force value of 2 g, the probe is pressed into the edible, water-in-oil (W/O) emulsified product with a probe penetration rate of 2 mm/sec, over a distance of 10 mm. The required peak force is then read out, expressed in g.

### Melting point determination:

The melting point of the hardstock phases was determined according to the standard method AOCS Official Method AOCS Cc 3-25. The fats are placed in at least 3 capillary test tubes and stored overnight at 4 - 10 °C. The melting point is assessed visually by gradually heating the capillaries in a water bath with simultaneous temperature measurement.

### Preparation of Hardstock phase A and B

### Comparative Example 1: Hardstock phase B

Hardstock phase B was produced as follows. Regular sunflower oil was fully hardened to an iodine number of less than 2. The fully hardened fat thus obtained was then mixed with an amount of regular sunflower oil. The mixture thus obtained was then chemically interesterified through the use of sodium methoxide as a catalyst. Then, the interesterified mixture was refined in order to obtain hardstock phase B. Hardstock phase B had a melting point of 53 °C ± 2 °C. Other characteristics of hardstock phase B are shown and described in Table 2.

### Example 2: Hardstock phase A

Hardstock phase A was produced as follows. Sunflower oil was fully hardened to an iodine number of less than 2. The fully hardened fat thus obtained was then mixed with an amount sunflower oil having an increased content of oleic acid. The mixture thus obtained was then chemically interesterified through the use of sodium methoxide as a catalyst. Then, the interesterified mixture was refined in order to obtain hardstock phase A. Hardstock phase A had a melting point of 53 °C ± 2 °C. Other characteristics of hardstock phase A are shown and described in Table 2.

### Preparation of Fat phase A and B

Fat phase A and fat phase B were respectively prepared by mixing hardstock phase A and hardstock phase B with traditional sunflower oil, saturated monoglycerides and antioxidants. The mixing ratios for both fat phases A and B are described below in Table 1. The content of sunflower oil and hardstock phase was varied in order to obtain a comparable SFC profile for both fat phases A and B. The characteristics of fat phase A and fat phase B are also shown and described in Table 2.

**Table 1: Composition of fat phase A and fat phase B**

| | **Comparative example 1: fat phase B** | **Example 2: fat phase A** |
|---|---|---|
| Hardstock phase | 76.94 kg hardstock phase B | 69.25 kg hardstock phase A |
| Sunflower oil | 2 kg | 9.69 kg |
| Saturated monoglycerides | 1 kg | 1 kg |
| Antioxidants | 0.06 kg | 0.06 kg |
| Sum total | 80 kg | 80 kg |

**Table 2: Characteristics of hardstock phase B, fat phase B, hardstock phase A, and fat phase A**

| | **Comparative Example 1** | | **Example 2** | |
|---|---|---|---|---|
| | **Hardstock phase B** | **Fat phase B** | **Hardstock phase A** | **Fat phase A** |
| | Fatty acid residue concentrations (wt. %) | | | |
| **C12:0** | 0.3 | 0.2 | 0.6 | 0.6 |
| **C14:0** | 0.2 | 0.2 | 0.3 | 0.5 |
| **C16:0** | 8.0 | 7.2 | 6.0 | 6.2 |
| **C18:0** | 43.3 | 44.4 | 46.3 | 41.4 |
| **(C16:0)/(C18:0)** | 0.18 | 0.16 | 0.13 | 0.15 |
| **C18:1 cis** | 17.9 | 19.1 | 41.2 | 38.3 |
| **C18:2 cis** | 26.7 | 25.7 | 3.5 | 10.2 |
| **C18:3 cis** | 0.1 | 0.1 | 0.0 | 0.0 |
| **C20:0** | 0.4 | 0.4 | 0.4 | 0.4 |
| **SAFA** | 53.4 | 53.6 | 54.7 | 51.0 |
| **MUFA** | 18.1 | 19.3 | 41.4 | 38.5 |
| **PUFA** | 26.7 | 25.7 | 3.5 | 10.2 |
| **Trans (TFA)** | 1.7 | 1.4 | 0.1 | 0.4 |

| | Solid fat content (SFC) (%) | | | |
|---|---|---|---|---|
| **SFC10** | 46 | 46 | 55 | 45 |
| **SFC20** | 36 | 35 | 50 | 41 |
| **SFC30** | 24 | 25 | 31 | 26 |
| **SFC35** | 19 | 20 | 23 | 19 |
| **SFC40** | 15 | 16 | 17 | 14 |

### Preparation of the edible, water-in-oil (WIO) emulsified product

Edible, water-in-oil (W/O) emulsified products, more in particular margarines, were produced using fat phase B of Comparative Example 1 and fat phase A of Example 2. This was carried out as follows. An aqueous phase at a temperature of 55 °C was prepared, this aqueous phase comprising 5 wt. % NaCl, and acidified to pH 3 using citric acid. 80 kg of the fat phase, i.e., fat phase B or fat phase A, in a molten state was then mixed with 20 kg of said aqueous phase until a warm water-in-oil (W/O) emulsion was obtained. Then, the warm water-in-oil (W/O) emulsion, having a temperature of 55 °C, was processed into a margarine, using a margarine production line. The margarine production line had an ACAB line configuration. The A unit, the B unit, and the C unit respectively had a volume of 0.6 L, 7.0 L, and 8.4 L. The rotation speed of both A units was set to 750 rpm. The rotation speed of the C unit was set to 150 rpm. The cooling in both A units was set in such a way that a product temperature was reached of 20 - 21 °C before the C unit, and 15 - 16 °C before the B unit, respectively. In a final step, the margarine, exiting the B unit as a final processing unit, was extruded and packed in a wrapper. Then, the extruded margarine wrapped in a wrapper was stored at a temperature of 15 °C.

The throughput of the total production line was set to 75 L/h for process condition (a) or 100 L/h for process condition (b). Thus, two production tests were carried out using the procedure described above, one using the fat phase B of Comparative Example 1 and the other using the fat phase A of Example 2 according to the present invention. The margarine based on the fat phase B of Comparative Example 1 is called "Comparative Product 1a" for process (a) and "Comparative Product 1b" for process (b). The margarine based on the fat phase A of Example 2 is called "Product 2a" for process (a) and "Product 2b" for process (b). The margarines of the Comparative Products 1a and 1b and of the Products 2a and 2b were observed for their respective consistency at 30 minutes after extrusion. The respective observations are shown below in Table 3.

**Table 3:**

| | **Process condition** | **Observed consistency after 30 minutes** |
|---|---|---|
| Comparative product 1a | a | Crumbly, brittle |
| Comparative product 1b | b | Crumbly, brittle |
| Product 2a | a | Ok |
| Product 2b | b | Ok |

Although the fat phase B of Comparative Example 1 and the fat phase A of Example 2 are both characterized by a comparable SFC profile, both Comparative Products 1a and 1b, said comparative products comprising the fat phase B of Comparative Example 1, show a margarine having a brittle, crumbly consistency at 30 minutes after extrusion, while both Products 2a and 2b, said products comprising the fat phase A of Example 2, show a margarine characterized by a good consistency that is not crumbly.

### Characteristics of edible, water-in-oil (W/O) emulsified product after storage

The margarines produced from the Comparative Products 1a and 1b and from the Products 2a and 2b were stored and preserved for four weeks at a temperature of 15 °C. After this period of four weeks of preservation and storage at a temperature of 15 °C, the concentration of crystalline fat at 15 °C and the hardness at 15 °C were measured for all margarines prepared from the Comparative Products 1a and 1b and from the Products 2a and 2b, according to the procedures described above. The characteristics of the margarines from the Comparative Products 1a and 1b and from the Products 2a and 2b are shown and described below in Table 4.

**Table 4:**

| | **Comparative Product 1a** | **Comparative Product 1b** | **Product 2a** | **Product 2b** |
|---|---|---|---|---|
| **Concentration of crystalline fat at 15 °C (%)** | 45 | 45 | 44 | 46 |
| **Kneading plasticity** | 1 | 1 | 3 | 3 |
| **Crumbliness** | 4 | 4 | 2 | 3 |
| **Presence of lumps** | 4 | 4 | 2 | 2 |
| **Hardness at 15 °C (g)** | 1536 | 1620 | 1273 | 1175 |

Moreover, the margarines from the Comparative Products 1a and 1b and from the Products 2a and 2b show the same concentration of crystalline fat at the storage temperature (15 °C). However, Comparative Products 1a and 1b are a significantly harder margarine when compared to Products 2a and 2b according to the present invention. A margarine that is too hard is difficult to process, in particular in laminating applications. This leads to the puncturing or tearing of the laminated dough. In such laminating applications, it is therefore crucial for the margarine to exhibit a good plasticity or malleability.

In order to determine the kneading plasticity, the crumbliness and the presence of lumps, the margarines produced from the Comparative Products 1a and 1b and from the Products 2a and 2b were manually kneaded by a trained evaluator. Said three parameters relating to the plasticity, the crumbliness and the presence of lumps were scaled to a 4-point scale. A value of 1 corresponded to 'absence of the property in question' and a value of 4 corresponded to a 'high presence of the property in question'. Plasticity was assessed by shaping the margarine manually into a homogenous flat disk. The crumbliness was assessed by breaking a small cut-out bar having a thickness of ca. 1 cm. Lumps are described as entities harder than the general margarine matrix.

### Preparation of puff pastries

Comparative Products 1a and 1b and Products 2a and 2b were further used as laminating margarines for the preparation of puff pastries in order to compare their respective functionalities in baked puff pastry shells, wherein the recipe was carried out according to Table 5, as shown below.

**Table 5: Recipe puff pastry**

| **Ingredient** | **Wt. %** |
|---|---|
| Laminating margarine | 33.1 (1000 g) |
| Flour | 41.3 (1250 g) |
| Water | 20.7 (625 g) |
| Salt | 0.8 (25 g) |
| Dough margarine | 4.1 (125 g) |

The laminated dough was prepared as follows. A dough premix was prepared by mixing all ingredients as described in Table 5 above, with the exception of the laminating margarine. Then, the dough premix was kneaded for forming a dough. The kneaded dough was then rolled out to a thickness of 8 mm. The laminating margarine was manually formed into a plate and placed between the dough. During laminating, the dough was repeatedly folded and rolled out again, resulting in a laminated dough having 256 layers. The latter was finally rolled out to a thickness of 3 mm. The puff pastry shell was eventually composed of 2 cut-out circular layers of dough, wherein the top layer was formed from an open circle. The puff pastry shell was baked in a conventional baking oven at 220 - 230 °C for 20 - 25 minutes. After this baking process, the average height of 12 baked puff pastry shells was determined. These average results are shown below in Table 6.

**Table 6:**

| | **Average height puff pastry shell (cm)** |
|---|---|
| Comparative product 1a | 4,0 |
| Comparative product 1b | 4,0 |
| Product 2a | 5,5 |
| Product 2b | 5,6 |

The results in terms of average height as shown in Table 6 above show that the laminating margarines from the Products 2a and 2b according to the present invention perform better in puff pastry when compared to the laminating margarines from the Comparative Products 1a and 1b. The crumbliness of both Comparative Products 1a and 1b is undesirable and this crumbliness complicated the manipulation of the laminating margarine. During the processing of the laminating margarines from the Comparative Products 1a and 1b, hard lumps of margarine were visible in the laminated dough, further puncturing the layers of dough. Moreover, the laminating margarines from the Products 2a and 2b exhibit an additional nutritional advantage when compared to the laminating margarines from the Comparative Products 1a and 1b in terms of saturated fat content (50.5 wt. % versus 53.4 wt. %).

## Claims

1. An edible, water-in-oil (W/O) emulsified product comprising from 60.0 to 98.0 weight percent [hereafter wt. %] of a fat phase, and 2.0 to 40.0 wt. % of an aqueous phase, relative to the total weight of the edible, water-in-oil W/O emulsified product,
wherein the fat phase comprises from 50.0 to 100.0 wt. % of a hardstock phase and at most 50.0 wt. % of at least one first liquid oil, wherein the hardstock phase comprises at least one fully hardened fat and wherein the hardstock phase comprises from 80.0 to 100.0 wt. % of an interesterified hardstock phase and at most 20.0 wt. % of a non-interesterified hardstock phase, and wherein the fat phase contains, relative to the total weight of all fatty acid residues in the fat phase:
a) at most 5.0 wt. % of saturated C12 fatty acid residues (C12:0),
b) at most 10.0 wt. % of saturated C16 fatty acid residues (C16:0),
c) less than 3.0 wt. % of trans fatty acid residues (TFA),
and wherein the fat phase is further **characterized by**:
d) a solid fat content (SFC) at 10 °C (SFC10) from 30.0 to 70.0%,
e) an SFC value at 20 °C (SFC20) from 20.0 to 50.0 %,
f) an SFC value at 40 °C (SFC40) from 0.0 to 25.0 %,
wherein the SFC values are measured according to the standard method AOCS Cd 16b-93,
and wherein the hardstock phase contains, relative to the total weight of all fatty acid residues in the hardstock phase:
g) 35.0 to 65.0 wt. % of saturated C18 fatty acid residues (C18:0),
h) 25.0 to 50.0 wt. % of mono-unsaturated C18 fatty acid residues (C18:1), and
i) at most 25.0 wt. % of poly-unsaturated C18 fatty acid residues (C18:2 and C18:3).

2. The edible, water-in-oil (W/O) emulsified product according to claim 1, **characterized in that** the fat phase contains at most 3.0 wt. % of saturated C12 fatty acid residues (C12:0), preferably at most 2.0 wt. %, more preferably at most 1.0 wt. %, relative to the total weight of all fatty acid residues in the fat phase.

3. The edible, water-in-oil (W/O) emulsified product according to claim 1 or claim 2, **characterized in that** the fat phase is **characterized by** an SFC10 from 35.0 to 60.0 %, preferably from 40.0 to 55.0 %, more preferably from 40.0 to 50.0 %, relative to the total fat phase.

4. The edible, water-in-oil (W/O) emulsified product according to any of the claims 1 to 3, **characterized in that** the fat phase is **characterized by** an SFC20 from 25.0 to 50.0 %, preferably from 35.0 to 50.0 %, relative to the total fat phase.

5. The edible, water-in-oil (W/O) emulsified product according to any of the claims 1 to 4, **characterized in that** the fat phase is **characterized by** an SFC40 from 5.0 to 25.0 %, preferably from 5.0 to 20.0 %, more preferably from 12.0 to 20.0 %, relative to the total fat phase.

6. The edible, water-in-oil (W/O) emulsified product according to any of the claims 1 to 5, **characterized in that** the fat phase is **characterized by** a difference in SFC10 versus SFC40 [hereafter SFC10-SFC40] of at least 23.0 %, preferably at least 25.0 %, more preferably at least 27.0 %, relative to the total fat phase.

7. The edible, water-in-oil (W/O) emulsified product according to any of the claims 1 to 6, **characterized in that** the fat phase comprises from 60.0 to 100.0 wt. % of the hardstock phase, or from 70.0 to 100.0 wt. %, or from 80.0 to 98.0 wt. %, or from 85.0 to 95.0 wt. %, relative to the total weight of the fat phase.

8. The edible, water-in-oil (W/O) emulsified product according to any of the claims 1 to 7, **characterized in that** the hardstock phase contains from 40.0 to 60.0 wt. % of saturated C18 fatty acid residues (C18:0), preferably from 40.0 to 55.0, relative to the total weight of all fatty acid residues in the hardstock phase.

9. The edible, water-in-oil (W/O) emulsified product according to any of the claims 1 to 8, **characterized in that** the hardstock phase contains from 28.0 to 50.0 wt. % of mono-unsaturated C18 fatty acid residues (C18:1), preferably from 32.0 to 50.0 wt. %, more preferably from 35.0 to 50.0 wt. %, relative to the total weight of all fatty acid residues in the hardstock phase.

10. The edible, water-in-oil (W/O) emulsified product according to any of the claims 1 to 9, **characterized in that** the hardstock phase contains at most 22.0 wt. % of poly-unsaturated C18 fatty acid residues (C18:2 and C18:3), preferably at most 20.0 wt. %, more preferably at most 18.0 wt. %, relative to the total weight of all fatty acid residues in the hardstock phase.

11. The edible, water-in-oil (W/O) emulsified product according to any of the claims 1 to 10, **characterized in that** the hardstock phase has a melting point of at least 45 °C.

12. The edible, water-in-oil (W/O) emulsified product according to any of the claims 1 to 11, **characterized in that** the fat phase comprises from 1.0 to 50.0 wt. % of at least one first liquid oil, or from 1.0 to 40.0 wt. %, or from 1.0 to 30.0 wt. %, or from 2.0 to 20.0 wt. %, or from 5.0 to 15.0 wt. %, relative to the total weight of the fat phase.

13. The edible, water-in-oil (W/O) emulsified product according to any of the claims 1 to 12, **characterized in that** the interesterified hardstock phase comprises at least one interesterified hardstock component which comprises the at least one fully hardened fat.

14. The edible, water-in-oil (W/O) emulsified product according to claim 13, **characterized in that** the at least one interesterified hardstock component contains a mixture of the at least one fully hardened fat and at least one second liquid oil.

15. The edible, water-in-oil (W/O) emulsified product according to claim 14, **characterized in that** the at least one second liquid oil is selected from the group consisting of sunflower oil having an increased content of oleic acid, rapeseed oil, olive oil, and/or fractions thereof, or combinations thereof, as well as varieties of these oils.

16. The edible, water-in-oil (W/O) emulsified product according to any of the claims 1 to 15, **characterized in that** the edible, water-in-oil (W/O) emulsified product comprises 65.0 to 90.0 wt. % of the fat phase and 10.0 to 35.0 wt. % of the aqueous phase, relative to the total weight of the edible, water-in-oil (W/O) emulsified product.

17. The edible, water-in-oil (W/O) emulsified product according to any of the claims 1 to 16, **characterized in that** the edible, water-in-oil (W/O) emulsified product is a bakery margarine.

18. The edible, water-in-oil (W/O) emulsified product according to claim 17, **characterized in that** the bakery margarine has a hardness ranging from 400 to 1400 g, wherein the hardness is measured using a Brookfield CTX Texture Analyzer equipped with a cylindrical probe having a 4.0 mm diameter, a probe penetration rate of 2 mm/sec, a trigger force of 2 g, over a distance of 10 mm, after stabilizing the water-in-oil (W/O) emulsified product for 48 hours at a temperature of 15 °C.

19. The edible, water-in-oil (W/O) emulsified product according to any of the claims 1 to 16, **characterized in that** the edible, water-in-oil (W/O) emulsified product is a laminating margarine.

20. The edible, water-in-oil (W/O) emulsified product according to claim 19, **characterized in that** the laminating margarine has a hardness ranging from 700 to 1400 g, wherein the hardness is measured using a Brookfield CTX Texture Analyzer equipped with a cylindrical probe having a 4.0 mm diameter, a probe penetration rate of 2 mm/sec, a trigger force of 2 g, over a distance of 10 mm, after stabilizing the water-in-oil (W/O) emulsified product for 48 hours at a temperature of 15 °C.

21. A method for producing the edible, water-in-oil (W/O) emulsified product according to any of the claims 1 to 20, comprising the following steps, relative to the total weight of the edible, water-in-oil (W/O) emulsified product:
1. providing a water-in-oil (W/O) emulsion by mixing:
a) 60.0 to 98.0 wt. % of a fat phase, preferably from 65.0 to 90.0 wt. %, more preferably from 70.0 to 85.0 wt. %;
b) 2.0 to 40.0 wt. % of an aqueous phase, preferably from 10.0 to 35.0 wt. %, more preferably from 15.0 to 30.0 wt. %;
wherein the mixing is carried out at a temperature at which the fat phase is at least partly, preferably entirely, in a molten state so as to form the water-in-oil (W/O) emulsion;
2. processing the water-in-oil (W/O) emulsion formed in Step 1 in a margarine production line comprising at least one pump, at least one A unit and at least one B unit so as to form the edible, water-in-oil (W/O) emulsified product.

22. The method according to claim 21, wherein in Step 1.a), the fat phase is prepared by mixing 50.0 to 100.0 wt. % of a hardstock phase with at most 50.0 wt. % of at least one first liquid oil, relative to the total weight of the fat phase, wherein the hardstock phase is prepared by mixing 80.0 to 100.0 wt. % of one or more than one interesterified hardstock component with at most 20.0 wt. % of one or more than one non-interesterified hardstock component, wherein at least one interesterified hardstock component is prepared by interesterification of a hardstock component comprising at least one fully hardened fat optionally mixed with at least one second liquid oil.

23. The method according to claim 21 or claim 22, wherein the margarine production line comprises at least one C unit.

24. The method according to any of the claims 21 to 23, wherein the total residence time in the at least one A unit is in the range from 15 to 120 seconds, or from 20 to 100 seconds, or from 30 to 80 seconds.

25. A dough, **characterized in that** the dough comprises the edible, water-in-oil (W/O) emulsified product according to any of the claims 1 to 20.

26. A baked bakery product, **characterized in that** the baked bakery product comprises the dough according to claim 25 and wherein the baked product is selected from the group consisting of cakes, waffles, biscuits, puff pastry, and viennoiserie products such as croissants.
